# EUROPEAN PATENT SPECIFICATION

(11) **EP 2 155 835 B1**
(45) Date of publication and mention of the grant of the patent: **15.07.2020**
(21) Application number: 08759188.9
(22) Date of filing: 09.06.2008
(51) Int. Cl.: C10G 1/06, C10G 3/00, C10G 45/02, C10G 45/58, C10G 49/22, C10G 47/00, C10G 47/24

(54) **ENHANCED PROCESS FOR THE HYDROCONVERSION OF HEAVY OILS THROUGH EBULLATED-BED SYSTEMS**
VERBESSERTES VERFAHREN ZUR HYDROKONVERSION VON SCHWERÖLEN DURCH SYSTEME MIT WALLENDEM BETT
PROCÉDÉ AMÉLIORÉ POUR L'HYDROCONVERSION D'HUILES LOURDES PAR DES SYSTÈMES À LIT BOUILLONNANT

(30) Priority: 14.06.2007 IT MI20071198
(43) Date of publication of application: 24.02.2010
(73) Proprietor: ENI S.p.A., 00144 Rome (IT)
(72) Inventor: RISPOLI, Giacomo, I-00168 Rome (IT); BELLUSSI, Giuseppe, I-29100 Piacenza (IT); PANARITI, Nicoletta, I-23900 Lecco (IT); TAGLIABUE, Lorenzo, I-29100 Piacenza (IT)
(74) Representative: Bottero, Carlo
(86) International application number: PCT/EP2008/004680
(87) International publication number: WO 2008/151792

(56) References cited:
- WO-A-2005/047425
- US-A- 5 932 090
- US-A1- 2006 054 533
- US-B1- 6 436 279

## Description

The present invention describes an enhanced process for the hydroconversion of heavy oils through ebullated-bed systems.

In processes used for the hydroconversion of heavy hydrocarbon residues, the feedstock to be treated is put in contact with hydrogen in the presence of a hydrogenation catalyst under suitable temperature and pressure conditions. The conversion degree for each single passage is never total. On the contrary, it is far from being so, to the extent that, in industrial practice, it is necessary for at least two reactors to be put in series in order to obtain a conversion degree of 70%. The non-converted fraction of the feedstock is inevitably destined for fuel oils or other equivalent uses of little economical interest and at times creating environmental problems.

In this area, the upgrading ebullated-bed technologies of heavy residues have improved the pre-existing fixed-bed technologies due to a higher efficiency of the catalyst, a better thermal and material exchange. The supported heterogeneous catalyst, in pellets having a suitable form and with millimetric dimensions, is suspended in the hydrocracking reactor, mainly regulating the liquid flow by means of the feeding flow-rate of the feedstock and through a recycling pump of the liquid, inside or outside the reactor. The flow-rates are regulated so that the catalyst is positioned in a central area of the reactor, delimited by a liquid seal at the inlet and outlet of the reactor. The reaction is of the once-through type, with no recycling and the reaction products are gas, naphtha, gas oil, vacuum gas oil (VGO) and fuel oil. The typical reaction conditions of a hydrocracking process with an ebullated-bed reactor, (see, for example, "Oil & Gas Science and Technology, Rev. IFP, Vol. 55, 2000, Nr. 4, p. 397") are indicated in the following table:

| Reaction conditions | standard | preferred |
|---|---|---|
| Residue content 975°F⁺ in the feedstock (w%) | 50-100 | 80-100 |
| LHSV (liquid hourly space velocity) hr⁻¹ | 0.1-1.0 | 0.2-0.5 |
| Reactor temperature °F | 700-850 | 770-820 |
| Partial pressure, psig | 500-3,500 | 2,500-3,000 |
| H₂ partial pressure at the reactor outlet, psi | 1,500-2,500 | 1,800-2,100 |
| Catalyst make-up rate Ib/bbl | 0.03-1.0 | 0.05-0.60 |

Even if the ebullated-bed technology has improved fixed-bed technologies, it still has various restrictions, as it produces fuel oil.

The catalyst used in ebullated-bed technologies normally consists of alumina as binder and two active phases, one responsible for the cracking activity and which can be introduced by acting on the composition of the binder (for example, SiO₂ or Al₂O₃ or blends thereof) or by adding a second material having acidic sites (clay or zeolites, for example) and one responsible for the hydrogen transfer activity, obtained by functionalization of the carrier with a suitable mixture of Mo(W)/Co(Ni)sulphides. This catalyst has a good hydrocracking capacity and a sufficient capacity for activating the molecular hydrogen and blocking the free radicals and formation of pitchy products which can cause a rapid deterioration of the catalyst or the obstruction of some of the plant sections. The limited hydrogen activation capacity, however, does not allow the heaviest reaction products to be recycled, thus limiting the conversion and causing the undesired production of fuel oil. Furthermore, for the same reasons, the concentrations of solid products (above all coke and its precursors) in the reaction means, must be maintained at low levels. In ebullated-bed processes, the solid hold-up (evaluated by means of the HFT Hot Filtration Test technique) is lower than about 0.2% and frequent maintenance interventions are necessary for removing the pitchy deposits formed in various areas of the plant.

As an alternative to hydroconversion processes based on the use of catalysts supported on fixed or ebullated beds, processes have also been proposed using homogeneously dispersed catalysts in the reaction means (slurry). These "slurry" processes are characterized by the presence of catalyst particles having very small average dimensions, micronic and/or sub-micronic and uniformly dispersed in the hydrocarbon phase.

The catalyst normally used in slurry processes consists of a nano-dispersion of laminar crystallites of molibdenite (MOS₂), produced *in-situ* in the reaction means, starting from an oil-soluble compound fed together with the feedstock (see, for example, IT-MI2003A000692 and IT-MI2003A000693) or *ex-situ,* by the interaction of a suitable molybdenum compound with H₂S or an organic sulphide. This material is highly efficient in the activation of hydrogen and has optimum properties as a scavenger of radicals (Applied Catalysis A: General, 204, 2000, p. 203). The main function of this material, in fact, is to limit the formation of resins or pitches from organic compounds having a low H/C ratio, by blocking and limiting the diffusion of free radicals in the reaction means, thus preventing the formation of coke. Molibdenite, however, has a low cracking capacity and consequently in slurry processes the cracking is mainly of a thermal nature (Applied Catalyst A: General, 204, 2000, page 215).

Furthermore, the catalyst activity is hardly influenced by the presence of carbonaceous residues coming from the degradation of asphaltenes.

The possibility of enhancing ebullated-bed technologies by adding a nano-dispersed catalyst based on MoS₂ to the reaction system, so that the concentration of the latter ranges from 10 to 500 ppm with respect to the feedstock, has also been proposed in literature (EP-546686 of Texaco Dev. Corp., US 2005/0241991 of Headwaters Heavy Oil LLC). The other process conditions are similar to those of ebullated-bed processes: there is no recycling of the heavy fraction and therefore fuel oil is still present in the reaction products, even if the quality of *bottom hydrocracking* has improved in terms of density with respect to the starting case. In once-through configurations, the concentration of molibdenite in the reaction means must be kept low as, in the absence of recycling, the catalyst is used ip. US 2005/0241991 discloses a process for hydroconversion of heavy oils.

In conclusion, even if improvements have been observed with respect to a typical ebullated-bed configuration, the main problems of this technology have not been completely solved.

A process has now been surprisingly found, which can be applied to heavy oils, selected from crude oils, heavy crude oils, bitumen from tar sands, distillation residues, distillation heavy cuts, deasphalted distillation residues, vegetable oils, oils from coal and oil shale, oils from the thermo-decomposition of waste material, polymers, biomasses, which is such as to substantially overcome the problems so far found in ebullated-bed hydrocracking processes for the conversion of heavy residues to distillates, by modifying the typical scheme of an ebullated-bed process by adding a recycling section to the reactor of the non- converted heavy portion obtained from the bottom of a distillation column or other liquid/vapour separation unit.

The process, object of the present invention, for the hydroconversion of heavy oils, includes sending the heavy oil to a hydroconversion area, effected in one ebullated-bed reactor, wherein hydrogen is introduced, in the presence of a suitable heterogeneous, supported hydroconversion catalyst, wherein the supported heterogeneous hydrogenation catalyst is made up of a carrier and an active phase, said active phase consisting of two components, the first component, always present, is a mixture of sulphides, one of which obtained from a metal belonging to group VIB and at least one obtained from a metal belonging to group VIII, the second component consisting of acidic sites introduced either by regulating the composition of the carrier or by adding a second phase to the carrier selected from a zeolite or a clay; and also a suitable hydrogenation catalyst, nano-dispersed in said heavy oil, wherein the concentration of the transition metal in the nano-dispersed catalyst, nano-dispersed in the feedstock, comprising the recycled stream, fed to the hydroconversion area, defined on the basis of the concentration of metal(s) present, ranges from 1000 to 20,000 ppm; and sending the stream coming from the hydroconversion area to a separation area, in which the liquid fraction separated, containing the nano-dispersed catalyst, is recycled to the ebullated bed reactor.

The separation area to which the effluent stream from the hydroconversion area is sent, whether it be in liquid or liquid/vapour phase, can include one or more atmospheric and/or vacuum distillation steps and/or one or more flash steps, whereby the separation is effected of the different fractions coming from the hydroconversion reaction from the distillation residue or from the liquid coming from the sole or last flash step, which is recycled to the ebullated bed reactor.

The separation area to which the effluent stream from the hydroconversion area is sent, if in vapour phase, can include one or more high pressure separators.

It is generally necessary to effect a purging on the recycled stream in order to prevent the metal sulphides, produced by the demetallation effect, from accumulating at excessively high levels which could jeopardize the process processability (not only in the hydrotreating reactor but also in the column bottoms, separators, pumps and pipes). Obviously, during the purging the catalyst is also unfortunately subtracted from the reaction cycle and must therefore be continuously reintegrated accordingly.

The heterogeneous hydrogenation catalyst, typical of ebullated beds, consists of a carrier and an active phase. The carrier typically used is based on alumina, silica or mixtures thereof having a suitable porosity. The active phase consists of two components. The first, always present, is a mixture of sulphides, one of which obtained from a metal belonging to group VIB (preferably Mo) and at least one obtained from a metal belonging to group VIII (preferably Ni or Co). The metals are initially deposited on the carrier as oxides and are then transformed into sulphides to be active in the reaction. The second consists of acidic sites introduced either by suitably regulating the composition of the carrier or by adding a second phase to the carrier such as, for example, a zeolite or a clay.

The preferred active phase is that having as first or sole component, a mixture of sulphides of which one derives from molybdenum and one from Ni or Co.

The nano-dispersed hydrogenation catalyst, i.e. with a dispersion of particles having micronic and/or sub-micronic dimensions (nano-dispersion), added to the fresh feedstock in such a quantity as to guarantee a sufficient activation degree of the hydrogen in the reactor, is based on Mo or W sulphide and can be formed *in-situ* starting from an oil-soluble, decomposable precursor, or *ex-situ* and can possibly contain one or more transition metals.

The make-up of the nano-dispersed catalyst is effected together with the feed of the fresh feedstock, in order to reintegrate the nano-dispersed catalyst discharged with the purging.

The presence of an optimal concentration of the nano-dispersed catalyst, in addition to limiting the formation of resins or pitches, allows a better *build-up* of solids (determined through the HFT technique) and limits the deterioration of the supported, heterogeneous catalyst. In this way it is possible to benefit from a higher cracking activity and, at the same time, allow the recycling of the heaviest fractions to the reactor, thus avoiding the production of fuel oil. The heterogeneous supported catalyst is collected in the central section of the hydrocracking reactor, as in traditional ebullated-beds, whereas the nano-dispersed catalyst based on Mo or W sulphide, circulates with the liquid through the various sections of the plant and is recycled to the reactor. The solution allows a very high conversion to be obtained together with a better quality of the products with respect to both ebullated-bed reactors and slurry reactors.

This option allows all the synergies between the two technologies (ebullated-bed and slurry systems) to be fully exploited, thus providing a new and enhanced process which makes use of the positive aspects of the supported heterogeneous catalyst, typical of the ebullated-bed technology, and those of the nano-dispersed catalyst typical of the slurry technology.

It is also possible to use the process according to the present invention for the revamping of an existing ebullated bed plant using the existing equipment and only effecting modifications for the introduction of the dispersed, additional catalyst, separating the products and recycling the heaviest products to the hydrocracking reactor.

The ebullated-bed system can be carried out according to the procedure and conditions typical of the known art (see, for example, "Oil & Gas Science and Technology, Rev. IFP, Vol. 55, 2000, Nr. 4, p. 397").

The concentration of the transition metal in the nano-dispersed catalyst, in the feedstock, including the recycled stream, fed to the hydroconversion area, ranges from 10 to 30,000 ppm, preferably from 1,000 to 20,000 ppm.

The reactor used is preferably run under a hydrogen pressure, or a mixture of hydrogen and hydrogen sulphide, ranging from 100 to 200 atmospheres, within a temperature range of 360 to 480°C. The mixture of gas, consisting of hydrogen and recycled gas, enters the reactor from above and is distributed through the catalytic bed by means of a suitable distributor of a specific design *(grid plate).*

The degree of purging required depends on the rate at which coke and metal sulphides are produced and on the concentration of solid matter in the reaction medium at the stationary state. By operating according to the process described, the purging to be effected can be maintained at a level lower than 10% with respect to the feedstock fed.

The possible distillation steps of the separation section to which the effluent stream from the hydroconversion zone is sent, can be carried out at reduced pressure, preferably between 0.001 and 0.5 MPa, more preferably between 0.01 and 0.3 MPa.

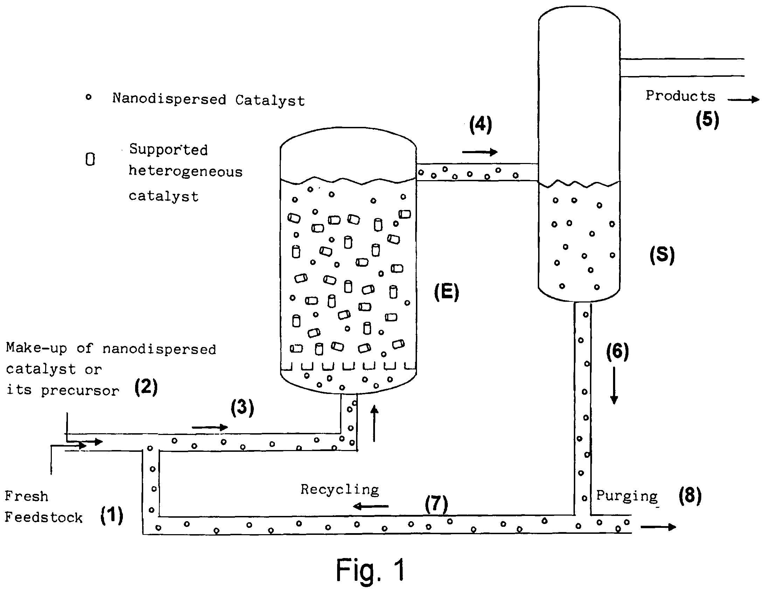

A preferred embodiment of the present invention is now provided with the help of Fig. 1 which, however, should not be considered a limitation of the scope of the claim itself.

The fresh heavy feedstock (1) is mixed with the fresh catalyst (2) and sent (3) to an ebullated-bed hydroconversion reactor (E) in which a supported heterogeneous catalyst is present.

A stream (4), containing the reaction product and the nano-dispersed catalyst, leaves said reactor (E) and is sent to a separation column (S) in order to separate the products (5) from the liquid fraction containing the nano-dispersed catalyst (6) which is recycled (7), after a purging (8), to the hydroconversion reactor.

### Example 1

Experimental tests were carried out in a pilot plant as represented in figure 1. The ebullated bed reactors were operated in a typical set of operating conditions.

Three comparative tests were conducted in the pilot plant:
- test A: the heavy bottom stream from the vacuum distillation column was recycled to the reactor and only a slurry catalyst was used. No other catalysts were used during the test.
- test B: the heavy bottom stream from the vacuum distillation column was recycled to the reactor and two catalysts were used: a slurry catalyst and a commercial catalyst in the ebullated beds.
- test C: the heavy bottom stream from the vacuum distillation column was recycled to the reactor and only
a commercial catalyst was used in the ebullated beds. The vacuum residue feed used for the experimental tests was produced from the Basrah Light oil. The feed characterization is reported in the table 1.

**Table 1: characterization of the VR Basrah Light**

| | | |
|---|---|---|
| Carbon | wt% | 83.45 |
| Hydrogen | wt% | 10.07 |
| Nitrogen | wt% | 0.38 |
| Sulfur | wt% | 4.82 |
| Asf C5 | wt% | 16.5 |
| MCRT | wt% | 24.77 |
| THFi | wt% | < 0.1 |
| Mo | wppm | 1795 |
| Nichel | wppm | 45 |
| Vanadium | wppm | 153 |
| Density at 15°C | Kg/m3 | 1031.4 |
| 5% | °C | 524 |
| 10% | °C | 540 |
| 20% | °C | 562 |
| 30% | °C | 581 |
| 40% | °C | 598 |
| 50% | °C | 615.5 |
| 60% | °C | 634 |
| 70% | °C | 653 |
| 80% | °C | 674.5 |
| 90% | °C | 698.5 |
| 95% | °C | 711.5 |

Operating conditions, products yield and HDx performances (HDS, HDN) are reported in table 2.

**Table 2: operating conditions, products yield and HDx performance**

| | test A | test B | Test C |
|---|---|---|---|
| Operating Conditions | | | |
| Temperature, °C | 430 | 400 | 400 |
| Total Pressure, barg | 140 | 140 | 140 |
| WHSV, h^{-1 (1)} | - | 0.51 | 0.49 |
| Mean Residence Time, h | 4.3 | 3.9 | 4.1 |
| Mo Concentration⁽²⁾ | 1000 | 1000 | - |
| Days On Stream | 30 | 30 | 6⁽³⁾ |
| | | | |

| Products distribution (wt%) | | | |
|---|---|---|---|
| H2S | 4.0 | 3.7 | ⁽⁴⁾ |
| C1-C4 | 8.9 | 9.6 | ⁽⁴⁾ |
| PI-170°C | 9.3 | 6.9 | ⁽⁴⁾ |
| 170-350°C | 33.6 | 44.3 | ⁽⁴⁾ |
| 350-500°C | 44.1 | 35.5 | ⁽⁴⁾ |
| HDN | 30.0 | 56.3 | ⁽⁴⁾ |
| HDS | 74.0 | 88.0 | ⁽⁴⁾ |

| | | | |
|---|---|---|---|
| ⁽¹⁾ Based on the ebullated bed catalyst load ⁽²⁾ Concentration in the liquid feed to the reactors ⁽³⁾ Test stopped due to the ebullated bed catalyst deactivation ⁽⁴⁾ Products yield not determined for ebullated bed catalyst continuous deactivation | | | |

Data produced in test B, using the slurry catalyst and the commercial catalyst in the ebullated bed, shows a much higher hydro-denitrogenation (HDN) and a higher hydro-desulfurization (HDS) compared to the results from test A, obtained using only the slurry catalyst. Furthermore, in test B was obtained a products yield distribution similar to that of test A, and with higher atmospheric diesel cut, but at lower operating condition severity, i.e. at a reactor temperature 30°C lower.

## Claims

1. A process for the hydroconversion of heavy oils, selected from crude oils, heavy crude oils, bitumens from tar sands, distillation residues, distillation heavy cuts, distillation deasphalted residues, vegetable oils, oils from coal and oil shale, oils from the thermo-decomposition of waste material, polymers, biomasses, comprising sending the heavy oil to a hydroconversion area, effected in one ebullated-bed reactor, wherein hydrogen is introduced, in the presence of a suitable heterogeneous, supported hydroconversion catalyst, wherein the supported heterogeneous hydrogenation catalyst is made up of a carrier and an active phase, said active phase consisting of two components, the first component, is a mixture of sulphides, one of which obtained from a metal belonging to group VIB and at least one obtained from a metal belonging to group VIII, the second component consisting of acidic sites introduced either by regulating the composition of the carrier or by adding a second phase to the carrier selected from a zeolite or a clay; and also a suitable hydrogenation catalyst, nano-dispersed in said heavy oil, wherein the concentration of the transition metal in the nano-dispersed catalyst, nano-dispersed in the feedstock, comprising the recycled stream, fed to the hydroconversion area, defined on the basis of the concentration of metal(s) present, ranges from 1000 to 20,000 ppm; and sending the stream coming from the hydroconversion area to a separation area, in which the liquid fraction separated, containing the nano-dispersed catalyst, is recycled to the ebullated bed reactor.

2. The process according to claim 1, wherein the separation area to which the effluent stream from the hydroconversion area is sent, if it is in liquid or mixed liquid/vapour phase, comprises one or more atmospheric and/or vacuum distillation and/or one or more flash steps, whereby the separation is effected of the different fractions coming from the hydroconversion reaction, from the distillation residue or from the liquid leaving the sole or last flash step, which is recycled to the ebullated-bed reactor.

3. The process according to claim 1, wherein the separation area to which the effluent stream from the hydroconversion area is sent, if it is in vapour phase, comprises one or more high-pressure separators.

4. The process according to claim 1, wherein a purging is effected on the liquid fraction separated containing the nano-dispersed catalyst, recycled to the ebullated-bed reactor.

5. The process according to claim 1, wherein the nanodispersed hydrogenation catalyst is based on Mo or W sulphide.

6. The process according to claim 5, wherein the nanodispersed hydrogenation catalyst can be formed *in-situ* starting from a decomposable oil-soluble precursor, or *exsitu.*

7. The process according to claim 1, wherein the concentration of the hydrogenation catalyst, nano-dispersed in the feedstock, comprising the recycled stream, fed to the hydroconversion area, ranges from 3,000 to 20,000 ppm.

8. The process according to claim 1, wherein the metal belonging to group VIB is molybdenum.

9. The process according to claim 1, wherein the metal belonging to group VIII is selected from Ni and Co.

10. The process according to claim 1, wherein the hydroconversion reactions in ebullated beds take place at temperatures ranging from 360 to 480°C and pressures ranging from 100 to 200 atmospheres.

11. The process according to claim 2, wherein the distillation steps are carried out at reduced pressure ranging from 0.001 to 0.5 MPa.

12. The process according to claim 11, wherein the distillation steps are carried out at reduced pressure ranging from 0.01 to 0.3 MPa.

## Patentansprüche

1. Verfahren zur Hydrokonversion von schweren Ölen, ausgewählt aus schweren Ölen, schweren Rohölen, Bitumen aus Teersanden, Destillationsrückständen, schweren Destillationsschnitten, deasphaltierten Destillationsrückständen, Pflanzenölen, Ölen aus Kohle- und Öl-Schiefern, Ölen aus der Thermo-Zersetzung von Abfallmaterial, Polymeren, Biomassen, umfassend das Zuführen von schwerem Öl zu einem Hydrokonversionsbereich, ausgeführt in einem Wallendbett-Reaktor, wobei Wasserstoff eingeführt wird in der Gegenwart eines geeigneten heterogenen, geträgerten Hydrokonversionskatalysators, wobei der geträgerte heterogene Hydrogenierungskatalysator aus einem Träger und einer Aktivphase besteht, die benannte Aktivphase besteht aus zwei Komponenten, wobei die erste Komponente eine Mischung aus Sulfiden ist, von der ein Teil erhalten wurde aus einem Metall, das zur Gruppe VIB, gehört und mindestens ein Teil erhalten wurde aus einem Metall, das zur Gruppe VIII gehört, die zweite Komponente besteht aus sauren Stellen, die dadurch eingeführt wurden, dass entweder die Zusammensetzung des Trägers eingestellt wurde oder durch Zugabe einer zweiten Phase zu dem Träger, ausgewählt aus einem Zeolith oder einem Lehm; und auch ein geeigneter Hydrogenierungskatalysator, nanodispergiert in dem schweren Öl, wobei die Konzentration des Übergangsmetalls in dem nanodispergiertem Katalysator, nanodispergiert in der Einspeisung, umfassend den rezyklierten Strom, eingespeist in dem Hydrokonversionsbereich, definiert auf der Grundlage der Konzentration von vorhandenem Metall oder Metallen, in einem Bereich von 1 000 bis 20 000 ppm liegt; und Leitung des aus dem Hydrokonversionsbereich kommenden Stroms zu einem Trennungsbereich, wobei die abgetrennte flüssige Fraktion, die den nanodispergierten Katalysator enthält, zu dem Wallendbett-Reaktor rezykliert wird.

2. Verfahren nach Anspruch 1, wobei der Abtrennungsbereich, zu dem der Ausflussstrom aus dem Hydrokonversionsbereich geleitet wird, falls er in flüssiger oder gemischtflüssiger/dampfförmiger Phase vorliegt, eine oder mehrere atmosphärische und/oder Vakuumdestillations- und/oder eine oder mehrere Flash-Stufen umfasst, wobei die Abtrennung bewirkt wird der verschiedenen Fraktionen, die von der Hydrokonversionsreaktion kommen, von dem Destillationsrückstand oder von der Flüssigkeit, die die einzige oder letzte Flash-Stufe verlässt, die zu dem Wallendbett-Reaktor rezykliert wird.

3. Verfahren nach Anspruch 1, wobei der Abtrennungsbereich, zu dem der Ausflussstrom aus dem Hydrokonversionsbereich geleitet wird, einen oder mehrere Hochdruckseparatoren umfasst, falls er in dampfförmiger Phase vorliegt.

4. Verfahren nach Anspruch 1, wobei ein Spülen der getrennten flüssigen Fraktion, die den nanodispergierten Katalysator enthält, die zu dem Wallendbett-Reaktor rezykliert wird, durchgeführt wird.

5. Verfahren nach Anspruch 1, wobei der nanodispergierte Hydrogenierungskatalysator auf Mo- oder W-Sulfid basiert.

6. Verfahren nach Anspruch 5, wobei der nanodispergierte Hydrogenierungskatalysator *in-situ* gebildet werden kann, ausgehend von einem zersetzbaren, öllöslichen Vorläufer, oder *ex-situ.*

7. Verfahren nach Anspruch 1, wobei die Konzentration des Hydrogenierungskatalysatoren, nanodispergiert in der Einspeisung, umfassend den rezyklierten Strom, eingespeist in den Hydrokonversionsbereich, in einem Bereich von 3 000 bis 20 000 ppm liegt.

8. Verfahren nach Anspruch 1, wobei das zur Gruppe VIB gehörende Metall Molybdän ist.

9. Verfahren nach Anspruch 1, wobei das zur Gruppe VIII gehörende Metall ausgewählt ist aus Ni und Co.

10. Verfahren nach Anspruch 1, wobei die Hydrokonversionsreaktionen in wallenden Betten bei Temperaturen in einem Bereich von 360 bis 480°C und Drücken in einem Bereich von 100 bis 200 Atmosphären stattfinden.

11. Verfahren nach Anspruch 2, wobei die Destillationsstufen durchgeführt werden bei vermindertem Druck in einem Bereich von 0,001 bis 0,5 MPa.

12. Verfahren nach Anspruch 11, wobei die Destillationsstufen durchgeführt werden bei vermindertem Druck in einem Bereich von 0,01 bis 0,3 MPa.

## Revendications

1. Procédé pour l'hydroconversion d'huiles lourdes, choisies parmi les pétroles bruts, les pétroles bruts lourds, les bitumes provenant de sables bitumineux, les résidus de distillation, les coupes lourdes de distillation, les résidus de distillation désasphaltés, les huiles végétales, les huiles issues de la houille et du schiste bitumineux, les huiles issues de la décomposition thermique des déchets, des polymères, de la biomasse, comprenant l'envoi de l'huile lourde dans une zone d'hydroconversion, réalisée dans un réacteur à lit bouillonnant, où de l'hydrogène est introduit, en présence d'un catalyseur d'hydroconversion supporté et hétérogène approprié, dans lequel le catalyseur d'hydrogénation hétérogène supporté est constitué d'un entraîneur et d'une phase active, ladite phase active étant constituée de deux composants, le premier composant est un mélange de sulfures, l'un d'entre eux étant obtenu à partir d'un métal appartenant au groupe VIB et au moins un étant obtenu à partir d'un métal appartenant au groupe VIII, le deuxième composant étant constitué de sites acides introduits soit en régulant la composition de l'entraîneur, soit en ajoutant une deuxième phase à l'entraîneur choisie parmi une zéolite et une argile ; et aussi un catalyseur d'hydrogénation approprié, nanodispersé dans ladite huile lourde, dans lequel la concentration du métal de transition dans le catalyseur nanodispersé, nanodispersé dans la matière première, comprenant le courant recyclé, transmis à la zone d'hydroconversion, définie en se basant sur la concentration du métal ou des métaux présent(s), est comprise entre 1 000 et 20 000 ppm ; et l'envoi du courant provenant de la zone d'hydroconversion vers une zone de séparation, dans laquelle la fraction liquide séparée, contenant le catalyseur nanodispersé, est recyclée vers le réacteur à lit bouillonnant.

2. Procédé selon la revendication 1, dans lequel la zone de séparation vers laquelle est envoyé le courant effluent de la zone d'hydroconversion, s'il est en phase liquide ou mélangée liquide/vapeur, comprend une ou plusieurs étapes de distillation atmosphérique et/ou sous vide et/ou une ou plusieurs étapes par détente, moyennant quoi est réalisée la séparation des différentes fractions provenant de la réaction d'hydroconversion, des résidus de distillation ou du liquide qui sort du socle ou de la dernière étape par détente, qui est recyclé vers le réacteur à lit bouillonnant.

3. Procédé selon la revendication 1, dans lequel la zone de séparation vers laquelle est envoyé le courant effluent de la zone d'hydroconversion, s'il est en phase vapeur, comprend un ou plusieurs séparateurs à haute pression.

4. Procédé selon la revendication 1, dans lequel une purge est réalisée sur la fraction liquide séparée qui contient le catalyseur nanodispersé, recyclé vers le réacteur à lit bouillonnant.

5. Procédé selon la revendication 1, dans lequel le catalyseur d'hydrogénation nanodispersé est basé sur le sulfure de molybdène ou de tungstène.

6. Procédé selon la revendication 5, dans lequel le catalyseur d'hydrogénation nanodispersé peut être formé *in situ* à partir d'un précurseur pouvant se décomposer et soluble dans l'huile, ou *ex situ.*

7. Procédé selon la revendication 1, dans lequel la concentration du catalyseur d'hydrogénation, nanodispersé dans la matière première, comprenant le courant recyclé, transmis à la zone d'hydroconversion, est comprise entre 3 000 et 20 000 ppm.

8. Procédé selon la revendication 1, dans lequel le métal appartenant au groupe VIB est le molybdène.

9. Procédé selon la revendication 1, dans lequel le métal appartenant au groupe VIII est choisi parmi le nickel et le cobalt.

10. Procédé selon la revendication 1, dans lequel les réactions d'hydroconversion dans des lits bouillonnants ont lieu à des températures de 360 à 480 °C et à des pressions de 100 à 200 atmosphères.

11. Procédé selon la revendication 2, dans lequel les étapes de distillation sont exécutées à une pression réduite qui va de 0,001 à 0,5 MPa.

12. Procédé selon la revendication 11, dans lequel les étapes de distillation sont exécutées à une pression réduite qui va de 0,01 à 0,3 MPa.
